# EUROPEAN PATENT SPECIFICATION

(11) **EP 2 989 168 B1**
(45) Date of publication and mention of the grant of the patent: **07.06.2017**
(21) Application number: 14714591.6
(22) Date of filing: 25.03.2014
(51) Int. Cl.: C09B 67/22

(54) **PIGMENT COMPOSITION AND PIGMENT/RESIN MIXTURE**
PIGMENTZUSAMMENSETZUNG UND PIGMENT-/HARZMISCHUNG
COMPOSITION PIGMENTAIRE ET MÉLANGE PIGMENT/RÉSINE

(30) Priority: 26.04.2013 JP 2013093403
(43) Date of publication of application: 02.03.2016
(73) Proprietor: Clariant International Ltd, 4132 Muttenz (CH)
(72) Inventor: HARADA, Daisuke, Shimada city, Shizuoka 428-0017 (JP); ICHIHARA, Yuya, Fukuroi city, Shizuoka 437-0039 (JP)
(74) Representative: Hütter, Klaus
(86) International application number: PCT/EP2014/000807
(87) International publication number: WO 2014/173487

(56) References cited:
- EP-A1- 0 866 106
- EP-A1- 0 937 724
- EP-A1- 1 106 656
- EP-A1- 1 217 045
- US-A1- 2005 119 377
- DATABASE WPI Week 200022 Thomson Scientific, London, GB; AN 2000-251708 XP002728142, -& JP 2000 063699 A (DAINIPPON INK & CHEM INC) 29 February 2000 (2000-02-29)
- DATABASE WPI Week 200013 Thomson Scientific, London, GB; AN 2000-142778 XP002728143, -& JP 2000 007974 A (DAINIPPON INK&CHEM INC) 11 January 2000 (2000-01-11)

## Description

### BACKGROUND OF THE INVENTION

### 1. Field of the Invention

The present invention relates to a composition comprising a plurality of specific pigments exhibiting excellent electrical properties, including electrical insulating properties, and environmental safety, reduced coloration unevenness in resinous products, and having high heat resistance; use of a combination of a plurality of specific pigments, a pigment/resin mixture comprising the composition or the combination, as well as an electronic part comprising the pigment/resin mixture.

### 2. Description of the Related Art

As parts for electronic appliances and for machines or apparatus, molded resin parts colored in black with carbon black have been widely used. The reasons therefor include the following: carbon black is chemically stable and has a high coloring strength; small addition amounts thereof suffice; and carbon black causes no decrease in the mechanical properties and thermal properties, and is inexpensive. However, as a result of the recent expansion of applications of resinous products, the products have come to be increasingly used under severer environments, e.g., high temperatures, high humidities, or high voltages. With respect to carbon black for use as colorants also, there is a growing demand for mitigating the drawbacks thereof. For example, in the cases where resinous products are used as electrical parts, colorants having high electrical insulating properties and tracking resistance are desired (JP09194694A). Furthermore, in the case of resins for use in applications where transparency to infrared radiations is required, colorants which do not impair the transparency to infrared radiation are desired (JP2005187798A).

Electrical insulation failure, which is problematic in the resinous products described above, is a phenomenon in which an electric conductive component, e.g., carbon black, present in an insulating resin forms a conduction path to cause an electric current to flow therethrough. The tracking of resins is a phenomenon in which a microspark discharge is generated at the contact part of a terminal, plug, or the like of an electric appliance due to the presence of dust or moisture and the part where the discharge generated is carbonized to form a conduction path (track). It is said that this phenomenon is causative of the firing of molded plastic articles. It is considered that carbon present on the surface acts as an electrode for microdischarges, causing tracking. It has hence been proposed to use black dyes or black organic pigments in the place of carbon black for use as coloring additives for, for example, electric parts (JP09194694A). However, these coloring materials significantly differ from carbon black in respect to the hue and have a drawback in that the heat resistance is low. Because of this, if there are fluctuations in the resin residence time or resin heating temperature within the heater of molding machines or there is a mold temperature distribution, etc., noticeable color unevenness results due to the fluctuations or distribution, and sometimes the yield of the products is considerably lowered. Consequently, there is a demand for a pigment composition which is a combination of pigments, which is capable of producing a hue close to a desired one and which only causes little change in hue with fluctuations in the heating temperature.

In recent years, it has been strongly required that plastic products be environmentally safe by being able to minimize the generation of toxic gases, e.g., dioxins, during combustion, and efforts are being made to reduce the halogen content of products, for example, to 5,000 ppm or less. In particular, with respect to plastic products for housings of electronic appliances such as personal computers, a strict request for the halogen content to be 1,500 ppm or less has been made by IEC 61249-2-21, etc. Therefore, when an ordinary organic pigment is used in the place of carbon black, it is often the case that the amount of halogens present in the pigment already exceeds the requested value.

Therefore, removal of halogens from organic pigments for use in coloring plastic products is strongly desired. Meanwhile, it is said that halogen substituents on the molecular structure of an organic pigment improves the fastness properties of the pigment (light stability and heat resistance). Due to this, the use of pigments comprising no halogen substituent or the like is apt to be accompanied by a color change during a high-temperature molding operation because the pigments undergo thermal decomposition, change in their crystal structure, etc. Hence, it is not easy to select a plurality of halogen-free pigments in order to obtain a desired hue without impairing their fastness properties. Furthermore, even when the halogen substituent and the halogen ion were able to be removed from the pigment molecule structure, the pigment production steps include many steps where halogens are apt to remain. For example, by-products may remain from the synthesis, and halogens may remain after the salt milling dispersion step. In cases where the pigment in such a state agglomerates and solidifies, it becomes difficult to remove the halogens confined therein. The removal of such trace halogens is a key factor in cost increase.

Although many efforts to produce halogen-free organic pigments have been made for these reasons, there has not yet been found a combination of organic pigments which has satisfactory electrical properties and high heat fastness, can color resins in a black hue close to that obtained with carbon black, and renders a cost reduction possible.

EP 0 937 724 A1 discloses perylene compounds and their use as pigmentary dispersants.

EP 1 217 045 A1 discloses a green pigment composition comprising a mixture of halogen-free blue pigment and a halogen free yellow pigment and a halogen-free pigment derivative.

EP 1 106 656 A1 discloses a process for preparing a green pigment composition containing no halogen in which a halogen-free blue pigment and a halogen-free yellow pigment are subjected to an atomizing process in mixture.

JP 1998-0238889 discloses a green pigment made by blending a halogen-free yellow pigment and a halogen-free blue pigment where the mixture is useful for production of paints and inks.

JP 2000-007974 discloses a green ink composition for printing wiring board using a halogen-free coloring pigment.

### SUMMARY OF THE INVENTION

An object of the present invention is to provide a combination of pigments which is excellent in terms of electrical properties including electrical insulating properties and environmental safety, has a hue close to that of carbon black, and gives a high coloring strength. Another object of the invention is to provide a combination of pigments which is excellent in terms of properties such as heat resistance besides the aforementioned properties.

Other objects of the invention will be obvious to a person skilled in the art from the following description.

In view of the current circumstances described above, the present inventors conducted extensive studies in order to solve the drawbacks of the prior art. As a result, the inventors have developed the following guidelines for accomplishing the objects of the invention.
(1) The permissible halogen contents in plastic products, as a tentative standard, according to IEC 61249-2-21 are 900 ppm or less for chlorine, 900 ppm or less for bromine, and 1,500 ppm or less for the sum of chlorine and bromine. However, no halogen contents (concentration value) permissible for the components of the products are shown. Hence, a halogen concentration permissible for pigments was estimated. On the assumption that the permissible halogen content of a resinous product is 1,500 ppm, the amount of an organic pigment added to the resin is 1 wt%, and the permissible halogen concentration attributable to the organic pigment is about three times the proportion of the pigment in the resin, then the halogen concentration attributable to the pigment in the pigment/resin mixture is 45 ppm (1,500×0.01×3=45). Namely, a permissible halogen concentration in the organic pigments as coloring raw materials is 4,500 ppm (45x100) or about 5,000 ppm as a tentative standard.
(2) In order for coloring pigments to have a halogen content reduced to 5,000 ppm or less, all of the main pigments to be used must have a molecular structure which contains no halogen. However, when the halogen substituents are removed therefrom, there is much fear that the heat resistance of the pigments may decrease.
(3) A phthalocyanine pigment, which is well known as a pigment which contains no halogen in the molecular structure and has satisfactory heat fastness, is hence chosen as a first pigment, and this facilitates screening for selecting second and third pigments to be used in combination therewith.

On the basis of the ideas shown above, a large number of pigments containing no halogen in their molecular structures were collected and each pigment was examined for its halogen content. By selecting a plurality of pigments from among these pigments, a combination of pigments which was able to display a black color very close to the hue of carbon black and had a high coloring strength could be obtained, and the invention has thus been accomplished. Furthermore, the heat resistance temperatures of pigments were also determined from the temperature dependence of the hue of polypropylene resin dispersions in accordance with the German standard DIN EN 12877, and requirements suitable for obtaining a high heat resistance were also figured out.

Accordingly, the present invention relates to:
1. A pigment composition comprising a plurality of organic pigments P1 and P2 as essential components and optionally further comprising a third pigment P3, the first pigment P1 being at least one phthalocyanine pigment, the second pigment P2 being at least one pigment selected from perylene pigments, wherein the perylene pigment is C.I. Pigment Red 149 and/or C.I. Pigment Red 179 and each of the organic pigments P1, P2, and P3 being a pigment that contains no halogen in its molecular structure;
2. A pigment composition as set forth in 1 above, wherein the organic pigment P1 is at least one selected from the group consisting of C.I. Pigment Blue 15, C.I. Pigment Blue 15:1, C.I. Pigment Blue 15:2, C.I. Pigment Blue 15:3, C.I. Pigment Blue 15:4, C.I. Pigment Blue 15:5, C.I. Pigment Blue 15:6, and C.I. Pigment Blue 16;
3. A pigment composition as set forth in any one of 1 to 2 above, wherein the organic pigment P3 is at least one selected from the group consisting of azo pigments, perinone pigments, quinacridone pigments, and anthraquinone pigments;
4. A pigment composition as set forth in any one of 1 to 3 above, wherein the second organic pigment P2 is at least one perylene pigment and the weight ratio of the first organic pigment P1, the second organic pigment P2, and the third organic pigment P3 is (10-80):(50-10):(50-10);
5. A pigment composition as set forth in any one of 1 to 4 above, wherein the total content of halogens present in the organic pigments P1, P2, and P3 as impurities, as determined by ion chromatography, is 5,000 ppm or less;
6. A pigment composition as set forth in any one of 1 to 5 above, wherein the organic pigments P1, P2, and P3 have a heat resistance temperature of a dispersion in a polypropylene resin in accordance with the German standard DIN EN 12877, of 260 °C or higher;
7. Use of a plurality of organic pigments P1 and P2 as essential ingredients and optionally a third pigment P3, for rendering a resin black, and each of the organic pigments P1, P2, and P3 being a pigment which contains no halogen in its molecular structure, and are as described above;
8. A pigment/resin mixture obtainable by melt-mixing a pigment composition according to any one of 1 to 6 above with a resin, and then molding the mixture;
9. A pigment/resin mixture obtainable by melt-mixing resin pellets comprising a first organic pigment P1, resin pellets comprising a second organic pigment P2, and optionally resin pellets comprising a third organic pigment P3, together, and then molding the mixture, and each of the organic pigments P1, P2, and P3 being a pigment which contains no halogen in its molecular structure, and are as described above;
10. A pigment/resin mixture as set forth in 9 above, wherein the organic pigment P1 is at least one selected from the group consisting of C.I. Pigment Blue 15, C.I. Pigment Blue 15:1, C.I. Pigment Blue 15:2, C.I. Pigment Blue 15:3, C.I. Pigment Blue 15:4, C.I. Pigment Blue 15:5, C.I. Pigment Blue 15:6, and C.I. Pigment Blue 16;
11. A pigment/resin mixture as set forth in any one of 9 and 10 above, wherein the weight ratio of the first organic pigment P1, the second organic pigment P2, and the third organic pigment P3 is (10-80):(50-10):(50-10);
12. A pigment/resin mixture as set forth in any one of 9 to 11 above, wherein the total content of halogens present in the organic pigments P1, P2, and P3 as impurities, as determined by ion chromatography, is 5,000 ppm or less;
13. A pigment/resin mixture as set forth in any one of 9 to 12 above, wherein the organic pigments P1, P2, and P3 have a heat resistance temperature of a dispersion in a polypropylene resin in accordance with the German standard DIN EN 12877, of 260 °C or higher;
14. A pigment/resin mixture as set forth in any one of 8 to 13 above, wherein the resin is selected from the group consisting of homo- and copolymers of an olefin, such as ethylene or propylene, butadiene, a (meth)acrylate, styrene, acrylonitrile, or the like, polyamides, polyesters, polycarbonates, polyacetals, polysulfones, poly(phenylene oxides), poly(ether sulfones), polycycloolefins, silicone resins, fluororesins, and poly(lactic acids); and
15. A molded electric part comprising a pigment/resin mixture according to any one of 8 to 14 above.

According to the present invention, the combination of a plurality of selected specific organic pigments brings about the following effects: since organic pigments are used in the place of carbon black, the colored resinous products are excellent in terms of electrical properties including electrical insulating properties; since the pigments contain substantially no halogen, the environmental safety is excellent; and the pigment combination can produce a hue, e.g., black, which is close to that of carbon black and has a high coloring strength. Furthermore, it is possible to accomplish thermal stability during resin molding and transparency to infrared radiation.

### BRIEF DESCRIPTION OF THE DRAWING

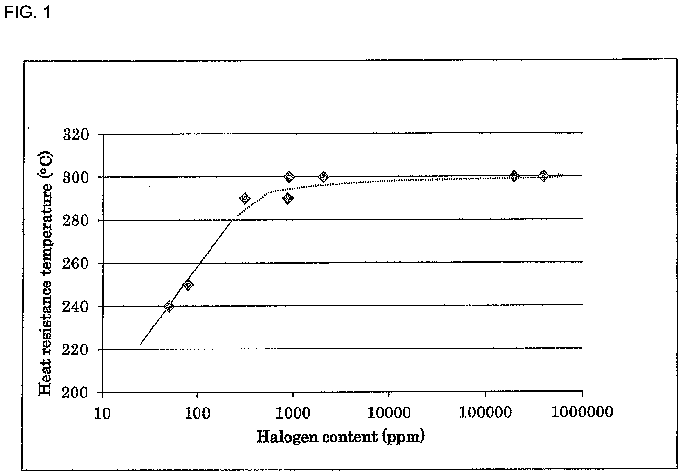

FIG. 1 shows a relationship between the halogen content and the heat resistance temperature in pigments for which the accurate values of the respective halogen contents have been determined.

### BEST MODE FOR CARRYING OUT THE INVENTION

The invention will be described below in detail.

The term "pigment composition" in the invention means a composition of a plurality of pigments which differ in hue, the composition being dispersed in a resin before use in coloring applications. In the present invention, the pigments do not have to be premixed with each other to form a composition, and may be individually dispersed and combined in a resin. The term "pigment/resin mixture" in the invention means a resin mixture in which a plurality of pigments is dispersed. There are two methods for producing the pigment/resin mixture: a method in which a plurality of pigments are mixed in advance in a given proportion and then mixed with a resin, and the resultant mixture is molded; and a method in which the pigments are separately mixed with a resin to prepare respective monochromatic pellets (masterbatches), the plurality of pellets having different colors are mixed together so as to match a given hue, and the mixture is molded. Both methods are usable.

It is necessary for the organic pigments for use in the invention to contain no halogen atoms in their molecular structures. Here, the halogen atoms in the molecular structure include both a halogen introduced as a substituent and a halogen introduced as the anion of a salt structure. However, it is possible to use, for the purposes of hue adjustment, etc., a small amount of a pigment containing a halogen in its molecular structure, so long as this pigment does not reduce considerably environmental safety. It is also possible to use a small amount of carbon black in combination with the organic pigments, if necessary, so long as the objects of the invention are not impaired.

Organic pigments suitable for use in the invention are organic pigments which have a heat resistance temperature of a dispersion in a polypropylene resin in accordance with the German standard DIN EN 12877, of 260°C or higher. Here, the heat resistance temperature according to the German standard DIN EN 12877 is determined in the following manner. A pigment is dispersed in a polypropylene resin, and this dispersion is molded to form a specimen. The specimen is heated under constant conditions and examined for a change in hue. The temperature at which the hue change (color difference) exceeds 3 is taken as the heat resistance temperature. The higher the heat resistance temperature, the higher the heat resistance of the pigment.

In order to achieve the objects of the invention, at least one phthalocyanine pigment is used as the first organic pigment P1. In order to satisfy the above-mentioned properties necessary for the invention, at least one pigment selected from the group consisting of C.I. Pigment Red 149 and/or C.I. Pigment Red 179 is used as the second organic pigment P2, which is to be used in combination with the phthalocyanine pigment. Of these pigments, perylene pigments are especially preferred as the organic pigment P2. It is especially preferred to select a third organic pigment P3 from azo pigments, perinone pigments, quinacridone pigments, and anthraquinone pigments.

Examples of phthalocyanine pigments as the first organic pigment P1 according to the invention include C.I. Pigment Blue 15, C.I. Pigment Blue 15:1, C.I. Pigment Blue 15:2, C.I. Pigment Blue 15:3, C.I. Pigment Blue 15:4, C.I. Pigment Blue 15:5, C.I. Pigment Blue 15:6, and C.I. Pigment Blue 16. One or more phthalocyanine pigments selected from these pigments may be used.

Examples of azo pigments usable as the third organic pigment according to the invention include C.I. Pigment Orange 64, C.I. Pigment Yellow 180, C.I. Pigment Yellow 181, C.I. Pigment Red 247, C.I. Pigment Yellow 151, C.I. Pigment Yellow 155, C.I. Pigment Yellow 120, C.I. Pigment Orange 68, C.I. Pigment Red 185, C.I. Pigment Red 176, C.I. Pigment Red 208, and C.I. Pigment Violet 32.

Examples of perinone pigments usable as the third organic pigment according to the invention include C.I. Pigment Orange 43.

Examples of quinacridone pigments usable as the third organic pigment according to the invention include C.I. Pigment Violet 19 and C.I. Pigment Red 122.

Examples of anthraquinone pigments usable as the third organic pigment according to the invention include C.I. Pigment Red 177.

A large number of electric parts and the like are generally black, and most of these have been conventionally colored with carbon black. Consequently, even in systems colored with organic pigments, it is significantly important from the standpoint of product designs that the products have a hue close to that obtained with carbon black. It is preferred that a preferred pigment composition for applications where such fine tuning is required comprises a phthalocyanine pigment, a perylene pigment, and a third organic pigment P3. In this case, the weight ratio of the phthalocyanine pigment (P1), the perylene pigment (P2), and the other organic pigment P3 is preferably (10-80):(50-10):(50-10), especially preferably (20-80):(40-10):(40-10). When the weight ratio thereof is within this range, this pigment combination can provide products, such as molded articles, which have a hue which is very close to the hue obtained with carbon black.

It is preferred that the organic pigments for use in the invention should have a total halogen content including any impurity present in the pigments of 5,000 ppm or less on a dry basis. The impurities are not limited to specific types, but include chemical ingredients other than the pigments necessary for the invention, i.e., by-products and chemical ingredients derived from raw materials used in the pigment synthesis, salts which were generated during the reaction of the raw materials, and residues of the ingredients which were added or entrained during, e.g., dispersion or processing of the pigment by salt milling or the like. The reason why the content of halogens including impurities is adjusted to 5,000 ppm or less is that, also with respect to the halogens which entered unintentionally as impurities, etc. into the pigments, the risk of threatening environmental safety through combustion, etc. is minimized. Furthermore, in the case of applications where environmental safety is strongly required, it is especially preferred that the content of halogens including impurities be 1,000 ppm or less.

There is no particular lower limit on the halogen content. However, when the cost of pigment production is taken into account, it is preferred that the content of halogens in the pigment be 50 ppm or higher on a dry basis. This is because attempts to lower the concentration of halogen impurities mixed in the pigment in many steps including pigment synthesis and salt milling to a value less than 50 ppm result in a considerable increase in production cost. Moreover, as shown in FIG. 1, it has been found that a halogen content of 50 ppm or higher in terms of the total halogen amount in the plurality of pigments is preferred from the standpoint of heat resistance. There are several methods for determining the halogen content in a pigment, including fluorescent X-ray analysis and ion chromatography according to EN 14582. It is, however, preferred to determine the halogen content by ion chromatography, with which a high-accuracy determination is possible even in a low-concentration range of about 100 to 200 ppm.

The surface of the pigment used in the present invention may be modified by a chemical operation such as sulfonation or diazotization depending on the purpose and need. Surface-modified pigments to which a neutral or charged functional group or a polymer chain has been imparted are also useful, and these surface-modified pigments are also known as self-dispersing pigments or graft pigments.

The flowability of polypropylene resins is generally evaluated in terms of melt flow rate in accordance with JIS K7210, and the tests are conducted at a temperature of 230 °C in many cases. Hence, if a polypropylene resin is used as a raw resin material for industrial products, it is preferred to select and use organic pigments which have, as a tentative standard, a heat resistance temperature of, for example, 260 °C or above, which is higher by 30 °C or more than the test temperature of 230 °C. This is because such pigments are less affected by a temperature distribution or temperature fluctuations during molding and can be inhibited from suffering a color change or a decrease in the coloring strength.

Since many general-purpose resins such as polystyrene, ABS resins, acrylic resins, and polyamide resins have moderate melt flow rates under the conditions of a test temperature of around 230 °C, the pigments having a heat resistance temperature of 260 °C or higher according to the invention can be expected to be preferred pigments for coloring these resins.

If even slight color unevenness in products must be avoided, it is preferred to select and combine pigments having a heat resistance temperature higher than that temperature, e.g., 290 °C or higher, because these pigments can provide molded articles which are homogeneous and have no color unevenness. Also in the case of resins having higher softening temperatures than polypropylene, such as, for example, polycarbonates and poly(butylene terephthalate), it is preferred to select and use pigments which each have a heat resistance temperature of a dispersion in a polypropylene resin in accordance with DIN EN 12877, of 260 °C or higher, especially 290 °C or higher.

Molding resins usable in the invention include homo- and copolymers of an olefin, such as ethylene or propylene, butadiene, a (meth)acrylate, styrene, and acrylonitrile, AS resins, ABS resins, and the like. The molding resins further include thermoplastic resins such as polyamides, polyesters, polycarbonates, polyacetals, polysulfones, poly(phenylene oxides), poly(ether sulfones), polycycloolefins, silicone resins, fluororesins, and biodegradable resins, e.g., poly(lactic acid), and thermosetting resins such as urethane resins and epoxy resins.

In the case of use of resins as automotive or machine parts, high mechanical strength and heat resistance are generally required, and engineering plastics having a high heat distortion temperature, such as polyamides and ABS resins, are hence suitable for that use. In the case of use of resins as electric parts, not only mechanical strength but also electrical properties including high electrical insulating properties and tracking resistance are important. Suitable for use in such electric-part applications are polyester resins, in particular, high-melting aromatic polyester resins.

The term "aromatic polyester resin" herein means a polyester resin which has aromatic rings in units contained in the polymer chain and which is a polymer or copolymer obtainable by the polycondensation of monomers which include, as main components, an aromatic dicarboxylic acid and/or an ester-forming derivative thereof and a diol and/or an ester-forming derivative thereof.

Examples of the aromatic dicarboxylic acid include terephthalic acid, isophthalic acid, orthophthalic acid, 1,5-naphthalenedicarboxylic acid, 2,5-naphthalenedicarboxylic acid, 2,6-naphthalenedicarboxylic acid, biphenyl-2,2'-dicarboxylic acid, biphenyl-3,3'-dicarboxylic acid, biphenyl-4,4'-dicarboxylic acid, diphenyl ether-4,4'-dicarboxylic acid, diphenylmethane-4,4'-dicarboxylic acid, diphenyl sulfone-4,4'-dicarboxylic acid, diphenylisopropylidene-4,4'-dicarboxylic acid, 1,2-bis(phenoxy)ethane-4,4'-dicarboxylic acid, anthracene-2,5-dicarboxylic acid, anthracene-2,6-dicarboxylic acid, p-terphenylene-4,4'-dicarboxylic acid, and pyridine-2,5-dicarboxylic acid. Preferred is terephthalic acid.

Two or more of these aromatic dicarboxylic acids may be used as a mixture thereof. Minor amounts of one or more aliphatic dicarboxylic acids selected from adipic acid, azelaic acid, dodecanedioic acid, sebacic acid, and the like can be used as a mixture thereof with these aromatic dicarboxylic acids.

Examples of the diol include aliphatic diols such as ethylene glycol, propylene glycol, butylene glycol, hexylene glycol, neopentyl glycol, 2-methylpropane-1,3-diol, diethylene glycol, and triethylene glycol and alicyclic diols such as cyclohexane-1,4-dimethanol. Two or more of these diols may be used as a mixture thereof. Minor amounts of one or more of long-chain diols having a weight-average molecular weight of 400 to 6,000, that is, poly(ethylene glycol), poly(1,3-propylene glycol), poly(tetramethylene glycol), etc., can be used as a mixture thereof with the aliphatic and/or alicyclic diols.

Specific examples of the aromatic polyesters include poly(ethylene terephthalate) (PET), poly(propylene terephthalate), poly(butylene terephthalate) (PBT), poly(ethylene naphthalate), poly(butylene naphthalate), poly(ethylene 1,2-bis(phenoxy)ethane-4,4'-dicarboxylate), and poly(cyclohexanedimethanol terephthalate), and further include copolyesters such as poly(ethylene isophthalate/terephthalate), poly(butylene isophthalate/terephthalate), and poly(butylene isophthalate/decanedicarboxylate). Preferred is poly(butylene terephthalate).

Although the pigment composition according to the invention or the coloring materials of the pigment/resin mixture according to the invention comprises organic pigments, an organic dye may be present in a minor proportion, if necessary. The pigments can be used in the form of not only dry powder but also a moist press cake. Examples of useful organic dyes include reactive dyes, acid dyes, oil-soluble dyes, and disperse dyes. It is, however, preferred that these dyes contain no halogen in their molecular structures.

Various inorganic fillers, other resins such as PTFE and polyolefins, various elastomer ingredients, flame retardants, antioxidants, weathering agents, lubricants, release agents, nucleating agents, plasticizers, antistatic agents, etc. can be added to the pigment/resin mixture according to the invention depending on the intended use, so long as this addition does not lessen the material properties and electrical insulating properties. However, it is especially preferred that these materials should each contain no halogen atoms in their molecular structures.

Examples of the inorganic fillers usable in the invention include fibrous reinforcements such as glass fibers and carbon fibers and powdery reinforcements such as potassium titanate, calcium carbonate, zinc borate, zinc stannate, and zinc oxide.

The amount of inorganic filler added can be 10 to 80 parts by weight per 100 parts by weight of the resin. If the amount of inorganic filler is less than 10 parts by weight, it is difficult to obtain molded articles having sufficient strength. If the amount thereof exceeds 80 parts by weight, it is difficult to obtain sufficient flowability for injection molding. From the standpoint of a balance between the strength and the flowability, the amount of the inorganic filler to be incorporated is preferably 20 to 75 parts by weight, more preferably 30 to 70 parts by weight, per 100 parts by weight of the thermoplastic resin.

With respect to specific examples of the flame retardants usable in the invention, phosphorus-compound flame retardants are suitable. In particular, metal salts of dialkylphosphinic acids are preferred from the standpoints of the absence of halogens in these salts and also various performances including an improvement in flame retardancy and a reduction in bleeding.

The amount of flame retardant added can be 5 to 40 parts by weight per 100 parts by weight of the thermoplastic resin. If the amount of flame retardant is less than 5 parts by weight, it is difficult to obtain sufficient flame retardancy. Amounts thereof exceeding 40 parts by weight are apt to result in deterioration in material properties.

There are no particular limitations on processes for producing the pigment/resin mixture of the invention, and ordinary processes can be satisfactorily used. However, melt kneading is generally preferred. The pigments according to the invention are mixed with a resin, a dispersion aid, etc., and the ingredients are melt-kneaded while being mixed, and are passed through an extruder and cut into a given size to produce pellets. The extruder may be operated either batchwise or continuously. As stated earlier, there are the following methods for preparing the pigment/resin mixture according to the present invention: a method in which a plurality of pigments are either mixed with a resin individually in proportions determined so as to obtain a desired hue, or mixed with a resin as a pigment composition having a preliminarily adjusted hue, and the resultant mixture is kneaded and molded to produce a masterbatch; and a method in which the pigments of respective colors are individually mixed and kneaded with a resin, the resultant monochromatic mixtures are formed into pellets, the plurality of monochromatic pellets of different colors are mixed and melted so as to give a desired hue, and the resultant mixture is molded into a product. Both methods are usable.

The pigment/resin mixture according to the invention can be used as a molding material for the live portions of electric parts for use in, for example, air conditioners, refrigerators, TVs, audios, motor vehicles, washers, dryers, etc. Examples thereof include switches, terminals, electric-relay coil bobbins and cases therefor, high-voltage coil bobbins and cases therefor, and Braun-tube deflection yokes. In particular, the pigment/resin mixture is useful in fields where the mixture is used as live parts or members in close vicinity to high voltages in a high-temperature high-humidity atmosphere.

Furthermore, the pigment/resin mixture according to the invention is suitable also for use in coloring various optical parts. For example, the mixture is suitable for use in applications where transparency to infrared radiation is necessary, such as, for example, optical windows to be disposed ahead of infrared camera lenses and the application in which, when a plastic part is heat-bonded by means of an infrared laser, the light path through which the laser light passes before reaching the fusion-bonding interface is colored black. Alternatively, the pigment/resin mixture is suitable also for use in applications such as colorants for heat-insulating coating materials based on sunlight reflection.

Other applications in which the pigment/resin mixture of the invention is suitable for use include the black matrix disposed in a color filter for use in liquid-crystal displays, etc. The color filter of a liquid-crystal display is an element for separating white light into light components of the three primary colors of R, G, and B to obtain color images, and the black matrix has the function of diminishing the light which passes through the interstices between the R, G, and B mosaic patterns, thereby heightening the image contrast. Although black matrices have conventionally been configured of a carbon-black coating layer, many elements have a conductive pattern disposed in the vicinity of the layer. There are hence cases where the conductivity of the carbon black causes a trouble, leading to a decrease in the display performance. Due to this, a colorant which has low conductivity and has a hue close to that of carbon blacks is desired. Furthermore, it is often the case that a long-time baking treatment at around 100 to 280 °C is conducted in the step of producing a color filter, and the pigment composition of the invention is suitable for use in such an application.

With respect to imaging applications of the pigment composition or pigment combination according to the invention, the composition or combination is useful as an image-forming element for electronic inks or electronic paper and as a colorant for toners for copiers, printers, etc., besides the color filter application described above.

### Examples

The invention will be described below in more detail by reference to Examples and Comparative Examples, but the invention should not be construed as being limited to the following Examples.

Methods for preparing the pigment/resin mixtures and test samples used in the Examples and Comparative Examples are shown below. The obtained samples were evaluated by the evaluation methods described in the last part of the Examples.

### (Selection of Pigments)

A large number of pigments which contained no halogen in their molecular structures and had a concentration of halogen-containing impurities reduced to 5,000 ppm or less by, for example, using selected raw materials in the production step or conducting precision cleaning in the final step were collected. These pigments were examined for heat resistance temperature. While using these temperatures as a measure, pigment compositions with which the objects of the invention could be accomplished were searched for.

### (Preparation of Pigment Compositions)

The pigments P1 and P2 and optionally pigment P3, which are described in the following Examples, were mixed together in weight ratios as shown in these examples to prepare pigment compositions.

### (Preparation of Pigment/resin Masterbatches and Test Pieces)

20 parts of a pigment composition (colorant) and 30 parts of a wax (Licowax 520 (registered trademark; manufactured by Clariant K.K.)) were weighed in a glass bottle and mixed. The mixture was heated at 150 °C for 30 minutes and then homogeneously mixed by means of a spatula. This mixture was ground for 3 minutes with a mill manufactured by IKA K.K. to obtain a wax base. 10 parts of this wax base was mixed with 790 parts of a polypropylene resin (trade name, Noblen W101; manufactured by Sumitomo Chemical Co., Ltd.; melt flow rate, 9 g/10 min at 230 °C) by hand mixing. The mixture was subjected to three passes through a twin-screw extruder (manufactured by TPIC Co., Ltd.; heater temperature, 230 °C) to disperse the pigments. The resultant mixture was cooled with water and then cut with a cutter to obtain a masterbatch having a pigment concentration of 0.5%. The masterbatch was injection-molded at a processing temperature of 230 °C with an injection molding machine (manufactured by Sanjo Seiki Co., Ltd.) to obtain colored test pieces.

### EXAMPLE 1

PV Fast Blue BG (C.I. Pigment Blue 15:3; manufactured by Clariant K.K.) as pigment P1, PV Fast Red B (C.I. Pigment Red 149; manufactured by Clariant K.K.) as pigment P2, and PV Fast Yellow HG (C.I. Pigment Yellow 180; manufactured by Clariant K.K.) as pigment P3 were used. Using these pigments in a weight ratio (P1:P2:P3) of 20:40:40, a pigment/resin masterbatch was obtained in accordance with the procedure described above in Preparation of Pigment/resin Masterbatches and Test Pieces. Using the masterbatch of Example 1, test pieces were formed by the method described above. The test pieces were evaluated by methods which will be described later, and the results thereof are shown in Table 1.

### EXAMPLES 2 AND 3

Test pieces were formed in the same manner as in Example 1, except that the weight ratio of P1, P2, and P3 in Example 1 was changed to 40:30:30 (Example 2) and to 70:15:15 (Example 3). The results of the evaluation thereof are shown in Table 1. Furthermore, with respect to Example 2, the data from the heat resistance measurement are shown in Table 3, data on infrared transmittance in Table 4, electrical resistance characteristics in Table 5, and results from the halogen content evaluation in Table 6; these results are shown together with those from Comparative Example 1 (carbon black pigment was used), etc. for comparison.

### EXAMPLE 4

Samples to be evaluated were formed using the same method and conditions as in Example 2, except that the PV Fast Yellow HG (C.I. Pigment Yellow 180; manufactured by Clariant K.K.) as pigment P3 was replaced with PV Fast Yellow H3R (C.I. Pigment Yellow 181; manufactured by Clariant K.K.). The results from the evaluation are shown in Table 1.

### EXAMPLE 5

Samples to be evaluated were formed using the same method and conditions as in Example 2, except that the PV Fast Yellow HG (C.I. Pigment Yellow 180; manufactured by Clariant K.K.) as pigment P3 was replaced with PV Fast Orange H2GL (C.I. Pigment Orange 64; manufactured by Clariant K.K.). The results from the evaluation are shown in Table 1.

### EXAMPLE 6

Samples to be evaluated were formed using the same method and conditions as in Example 2, except that the PV Fast Blue BG (C.I. Pigment Blue 15:3; manufactured by Clariant K.K.) as pigment P1 was replaced with PV Fast Blue A4R (C.I. Pigment Blue 15:1; manufactured by Clariant K.K.). The results from the evaluation are shown in Table 1.

### EXAMPLE 7

Samples to be evaluated were formed using the same method and conditions as in Example 2, except that the PV Fast Yellow HG (C.I. Pigment Yellow 180; manufactured by Clariant K.K.) as pigment P3 was replaced with PV Fast Orange GRL (C.I. Pigment Orange 43; manufactured by Clariant K.K.). The results from the evaluation are shown in Table 1.

### COMPARATIVE EXAMPLE 1

Using carbon black (Color Black FW200; C.I. Pigment Black 7; manufactured by Orion GmbH) as a black pigment in an addition amount of 20 parts, samples to be evaluated were formed in accordance with the procedure described above in Preparation of Pigment/resin Masterbatches and Test Pieces. The samples were evaluated. The results from the evaluation are shown in Table 1. Furthermore, the transparency to infrared radiations and electrical resistance characteristics thereof are respectively shown in Tables 4 and 5.

### COMPARATIVE EXAMPLE 2

Samples to be evaluated were formed using the same method and conditions as in Example 2, except that PV Fast Blue BG (C.I. Pigment Blue 15:3; manufactured by Clariant K.K.) was used as P1 and that PV Fast Red D3G (C.I. Pigment Red 254; manufactured by Clariant K.K.; containing a halogen substituent; halogen content, about 200,000 ppm) and PV Fast Green GNX (C.I. Pigment Green 7; manufactured by Clariant K.K; containing a halogen substituent; halogen content, about 450,000 ppm) were used as P2. The samples were evaluated, and the results therefrom are shown in Table 2.

### COMPARATIVE EXAMPLE 3

Samples to be evaluated were formed using the same method and conditions as in Example 2, except that PV Fast Blue BG (C.I. Pigment Blue 15:3; manufactured by Clariant K.K.) was used as P1 and that Graphtol Carmine F3RK70 (C.I. Pigment Red 170; manufactured by Clariant K.K.) and Graphtol Yellow H2R (C.I. Pigment Yellow 139; manufactured by Clariant K.K.) were used as P2 and P3, respectively. The samples were evaluated, and the results therefrom are shown in Table 2.

### COMPARATIVE EXAMPLE 4

Samples to be evaluated were formed using the same method and conditions as in Example 2, except that PV Fast Blue BG (C.I. Pigment Blue 15:3; manufactured by Clariant K.K.) was used as P1 and that PV Fast Red B (C.I. Pigment Red 149; manufactured by Clariant K.K.) and Graphtol Yellow H2R (C.I. Pigment Yellow 139; manufactured by Clariant K.K.) were used as P2 and P3, respectively. The samples were evaluated, and the results therefrom are shown in Table 2.

### COMPARATIVE EXAMPLE 5

Samples to be evaluated were formed using the same method and conditions as in Example 2, except that PV Fast Blue BG (C.I. Pigment Blue 15:3; manufactured by Clariant K.K.) was used as P1 and that Graphtol Carmine F3RK70 (C.I. Pigment Red 170; manufactured by Clariant K.K.) and PV Fast Yellow HG (C.I. Pigment Yellow 180) were used as P2 and P3, respectively. The samples were evaluated, and the results therefrom are shown in Table 2.

The trade name, C.I. number, heat resistance temperature of a dispersion in a polypropylene resin in accordance with the German standard DIN EN 12877, and content of halogens including impurities in each organic pigment used in the Examples and Comparative Examples are shown in Table 3.

Summaries of Tables 1 to 6 are as follows.

### <Table 1>

In respect to the samples which vary in the pigment types and ratios of P1, P2 and P3, Table 1 shows the results from the measurements of color difference and coloring strength of the molded samples (pigment/resin mixtures), using Comparative Example 1 as a control in which a carbon black pigment is used. It can be seen that favorable results are obtained in a P1:P2:P3 weight ratio of (20-70):(15-40):(15-40), especially (30-50):(25-35):(25-35), with a dE of 2 or less and a coloring strength of 90% or higher.

### <Table 2>

From the data of the measurements with various heat resistance temperatures of dispersions in a polypropylene resin in accordance with the German standard DIN EN 12877, it can be seen that, when pigments having high heat resistance are used in combination, the heat resistance of the pigment/resin mixture also is improved accordingly. A combination solely comprised of pigments having a heat resistance temperature of 260 °C or higher (Example 7) brought about a dE of 3 or less even at 300 °C or higher, and products reduced in color unevenness can be obtained therewith through molding at around 230 °C. Consequently, an improvement in yield can be expected. When a pigment composition is produced only from pigments having a heat resistance temperature as high as 290 °C or above, this composition shows an extremely small color change even when heated to 300 °C. Comparative Example 2 is a pigment/resin mixture comprising pigments having a high halogen content in combination and shows an extremely small change in color difference even when heated to 300 °C, but this mixture has a high halogen content and is not preferable in terms of environmental safety.

### <Table 3>

The trade name, C.I. number, and heat resistance temperature of a dispersion in a polypropylene resin in accordance with the German standard DIN EN 12877, and content of halogens including impurities in each organic pigment used in the Examples and Comparative Examples are shown in Table 3. Furthermore, the halogen content in each pigment powder as measured by ion chromatography under the conditions according to the Germany standard DE EN14582 is shown in Table 3. The description "≤ 5,000 ppm " used for the halogen content in the table is a quotation from the nominal value given by the manufacturer.

### <Table 4>

Table 4 is an example of data which demonstrate that use of the organic pigments according to the invention is more effective in improving transparency to infrared radiations than carbon black.

### <Table 5>

Table 5 exemplarily shows the volume resistance of the pigments according to the present invention, and demonstrates that the pigments have a far higher resistivity than that of the carbon black pigment and exhibit properties as an insulator. By using the pigment combination according to the invention, the chance that a molded resin may cause troubles due to an electrical insulation failure thereof becomes small. Even if the pigments are exposed in the surface of the insulator, the organic pigments themselves have high resistance and hence the possibility that such pigments might function as a discharge electrode is small. Tracking resistance can hence be improved.

### <Table 6>

Table 6 exemplarily shows the halogen contents in the organic pigments according to the invention. The data of Comparative Example 2, in which pigments having a chlorine substituent were used, are attributable to the chlorine, and this halogen content considerably exceeds the upper limit of the permissible chlorine content of 900 ppm according to IEC61249-2-21. Example 2, in which a pigment combination according to the invention was used, shows that the halogen content is about 200 ppm, and it is also possible to heighten the coloring density.

### <FIG. 1>

FIG. 1 shows a relationship between the halogen content and the heat resistance temperature in the pigments which, among the pigments shown in Table 3, have accurate measured values for their halogen contents. In the range of the Examples, there is a tendency that the heat resistance temperature decreases as the halogen content decreases. The reason therefor is unclear, and the behavior of other organic pigments cannot be predicted. However, with respect to those pigments which are preferred for use in the invention, it is expected that in the case of melt molding at, for example, 230 °C, it is preferred that the pigments have a halogen content of 50 ppm or higher. In FIG. 1, the data of an organic pigment C.I. Pigment Red 247 (manufactured by Clariant K.K.; trade name, PV Fast Red HB; heat resistance temperature, 290 °C; halogen content, 309 ppm), which was not used in any of the Examples and Comparative Examples, were also shown for reference.

### (Method for Evaluating Hue and Coloring Strength)

With respect to the test pieces formed, a color measurement was conducted using a spectrophotometer [SPECTRA FLASH SF 600 (manufactured by Datacolor International Ltd.)] with illuminant D65 as a light source for the measurement and at a viewing angle of 10°, and the color difference (dE) and coloring strength (%) were quantitatively evaluated. The hue is based on the color system definition standardized by the International Commission on Illumination (CIE). The coloring strength is calculated from the integration of spectral reflectances determined in the visible-light region. As a control, a carbon black pigment (Comparative Example 1) was used. In this evaluation, the test pieces having a color difference (dE) of 2.00 or less and a coloring strength (%) of 90 or higher, in comparison with the carbon black pigment (Comparative Example 1), were rated as satisfactory in terms of color characteristics.

### (Evaluation of Heat Resistance)

The evaluation was conducted in accordance with DIN EN 12877. The pigment/resin masterbatches produced using the pigment compositions of the invention were used, and the masterbatches were melted at different temperatures, maintained in each temperature range for a residence time of 5 minutes, and then injection-molded to produce molded plates. These plates were examined in respect to the color difference (dE*ab) with a spectrophotometer [SPECTRA FLASH SF600 (manufactured by Datacolor International Ltd.)]. The plates having a dE less than 3 were rated as satisfactory. The values thereof are shown in Table 2.

### (Determination of Infrared Radiation Transmittance)

0.05 g of a pigment and 100 g of a PVC resin (Vinnolit S 4170, manufactured by Vinnolit GmbH) were dispersed at 130 °C for 5 minutes with a two-roll mill (manufactured by Nishimura Koki Co., Ltd.) and then pressed at 170 °C with a hot press to form a 1 mm sheet. The formed sheet was examined for its IR transmittance at 800 nm with an ultraviolet/visible/near-infrared spectrophotometer UV-3600 (manufactured by Shimadzu Corp.). The transmittance thereof relative to the transmittance of a sheet of the PVC resin only, which was regarded as 100%, was determined. The values thereof are shown in Table 4.

### (Measurement of Electrical Resistance)

Pigments were filled into a measurement cell and examined for volume resistivity with a powder resistivity meter (manufactured by Mitsubishi Chemical Analytech Co., Ltd.) under a load of 15 N. The values thereof are shown in Table 5.

### (Determination of Halogen Content)

Analysis was carried out by the halogen analysis through oxygen bomb combustion in accordance with the standard EN 14582. A pigment/resin mixture, which contained a resin, was burned in a closed vessel with oxygen gas, and the resultant ash was analyzed by ion chromatography. In the Example, the measured value obtained through the analysis for chlorine only was shown. The halogen content in the pigments was obtained by subtracting the measured value (background) for a sample, from which only the pigments had been excluded, from the measured value for the pigment/resin mixture.

**[Table 1]**

| Measurement of Hue | | | | | | |
|---|---|---|---|---|---|---|
| | Pigments | | | | Evaluation results | |
| | Weight of carbon black (parts) | Weight proportion of phthalocyanine pigment P1 (parts) | Weight proportion of perylene pigment P2 (parts) | Weight proportion of azo pigment P3 (parts) | Color difference (dE) 2.00 or less | Coloring strength (%) 90 or higher |
| Example 1 | - | 20 (PBI 15:3) | 40 (PR 149) | 40 (PY 180) | 1.29 | 94 |
| Example 2 | - | 40 (PBI 15:3) | 30 (PR 149) | 30 (PY 180) | 0.98 | 95 |
| Example 3 | - | 70 (PBI 15:3) | 15 (PR 149) | 15 (PY 180) | 1.89 | 97 |
| Example 4 | | 40 (PBI 15:3) | 30 (PR 149) | 30 (PY 181) | 0.90 | 97 |
| Example 5 | | 40 (PBI 15:3) | 30 (PR 149) | 30 (PO 64) | 1.60 | 95 |
| Example 6 | | 40 (PBI 15:1) | 30 (PR 149) | 30 (PY 180) | 1.90 | 94 |
| Example 7 | | 40 (PBI 15:3) | 30 (PR 149) | 30 (PO 43) | 1.95 | 90 |
| Comp. Example 1 | 100 | - | - | | - | 100 |
| Comp. Example 2 | | 40 (PBI 15:3) | 30 (PR 254) (diketopyrrolopyrrole) | 30 (PG 7) (phthalocyanine) | 1.83 | 95 |

**[Table 2]**

| Determination of Heat Resistance | | | | | |
|---|---|---|---|---|---|
| | | Color difference (dE) | | | |
| Residence temperature | Pigment(s) used having heat resistance temperature lower than 260 °C | 240 °C | 260 °C | 280 °C | 300 °C |
| Comparative Example 2 | None (pigments containing halogen substituent were used) | 0.33 | 0.51 | 0.79 | 0.88 |
| Comparative Example 3 | PR 170 (250 °C or lower) | 2.10 | 3.56 | 9.87 | 12.52 |
| | PY 139 (240 °C or lower) | | | | |
| Comparative Example 4 | PY 139 (240 °C or lower) | 1.20 | 2.12 | 3.43 | 5.29 |
| Comparative Example 5 | PR 170 (250 °C or lower) | 1.90 | 2.34 | 4.48 | 6.35 |
| Example 2 | None (290 °C or higher) | 0.64 | 0.84 | 0.89 | 1.01 |
| Example 7 | None (260 °C or higher) | 0.77 | 1.02 | 2.43 | 2.97 |

**[Table 3]**

| Heat Resistance and Halogen Content (dry basis) of Each Pigment | | | |
|---|---|---|---|
| Pigment name | C.I. | Heat resistance (temperature at which dE is 3.0 or more) | Halogen content in pigment; ppm |
| PV Fast Blue BG | PB 15:3 | 300 °C or higher | 2,052 |
| PV Fast Blue A4R | PB 15:1 | 300 °C or higher | 900 |
| PV Fast Red B | PR 149 | 300 °C or higher | ≤ 5,000 |
| PV Fast Yellow HG | PY 180 | 290 °C | 873 |
| PV Fast Yellow H3R | PY 181 | 300 °C or higher | ≤ 5,000 |
| PV Fast Orange H2GL | PO 64 | 300 °C or higher | ≤ 5,000 |
| PV Fast Red HB | PR 247 | 290 °C | 309 |
| PV Fast Orange GRL | PO 43 | 260 °C | ≤ 5,000 |
| PV Fast Green GNX | PG 7 | 300 °C or higher | about 450,000 |
| PV Fast Red D3G | PR 254 | 300 °C or higher | about 200,000 |
| Graphtol Carmine F3RK70 | PR 170 | 250 °C | 80 |
| Graphtol Yellow H2R | PY 139 | 240 °C | ≤ 50 |

**[Table 4]**

| Determination of Infrared Radiation Transmittance | |
|---|---|
| | Infrared radiation transmittance (800 nm) % |
| Comparative Example 1 | 23.9 % |
| Example 2 | 93.5 % |

**[Table 5]**

| Measurement of Electrical Resistance | |
|---|---|
| | Volume resistivity Ω·cm |
| Comparative Example 1 | 3.3×10⁻² |
| Example 2 | 1.7×10¹⁴ |

**[Table 6]**

| Halogen Content | |
|---|---|
| | Halogen (chlorine) content ppm |
| Comparative Example 2 | 1,215 |
| Example 2 | 200 or less |

| | |
|---|---|
| (Permissible chlorine concentration: 900 ppm) | |

## Claims

1. A pigment composition comprising a plurality of organic pigments P1 and P2 as essential components and optionally further comprising a third pigment P3,
the first pigment P1 being at least one phthalocyanine pigment,
the second pigment P2 being at least one pigment selected from perylene pigments, and wherein the perylene pigment is C.I. Pigment Red 149 and/or C.I. Pigment Red 179, and
each of the organic pigments P1, P2, and P3 being a pigment which contains no halogen in its molecular structure.

2. A pigment composition as claimed in claim 1, wherein the organic pigment P1 is at least one selected from the group consisting of C.I. Pigment Blue 15, C.I. Pigment Blue 15:1, C.I. Pigment Blue 15:2, C.I. Pigment Blue 15:3, C.I. Pigment Blue 15:4, C.I. Pigment Blue 15:5, C.I. Pigment Blue 15:6, and C.I. Pigment Blue 16.

3. A pigment composition as claimed in any one of claims 1 to 2, wherein the organic pigment P3 is at least one selected from the group consisting of azo pigments, perinone pigments, quinacridone pigments, and anthraquinone pigments.

4. A pigment composition as claimed in any one of claims 1 to 3, wherein the weight ratio of the first organic pigment P1, the second organic pigment P2, and the third organic pigment P3 is (10-80):(50-10):(50-10).

5. A pigment composition as claimed in any one of claims 1 to 4, wherein the total content of halogens present in the organic pigments P1, P2, and P3 as impurities, as determined by ion chromatography, is 5,000 ppm or less.

6. A pigment composition as claimed in any one of claims 1 to 5, wherein the organic pigments P1, P2, and P3 have a heat resistance temperature of a dispersion in a polypropylene resin in accordance with the German standard DIN EN 12877, of 260 °C or higher.

7. Use of a plurality of organic pigments P1 and P2 as essential ingredients and a third pigment P3 as an optional ingredient, for rendering a resin black, and
each of the organic pigments P1, P2, and P3 being a pigment which contains no halogen in its molecular structure and are as claimed in any of the preceding claims.

8. A pigment/resin mixture obtainable by melt-mixing a pigment composition according to any one of claims 1 to 6 with a resin, and then molding the mixture.

9. A pigment/resin mixture obtainable by melt-mixing resin pellets comprising a first organic pigment P1, resin pellets comprising a second organic pigment P2, and optionally resin pellets comprising a third organic pigment P3, together, and then molding the mixture, and
each of the organic pigments P1, P2, and P3 being a pigment which contains no halogen in its molecular structure and are as claimed in any of the preceding claims.

10. A pigment/resin mixture as claimed in claim 9, wherein the organic pigment P1 is at least one selected from the group consisting of C.I. Pigment Blue 15, C.I. Pigment Blue 15:1, C.I. Pigment Blue 15:2, C.I. Pigment Blue 15:3, C.I. Pigment Blue 15:4, C.I. Pigment Blue 15:5, C.I. Pigment Blue 15:6, and C.I. Pigment Blue 16.

11. A pigment/resin mixture as claimed in any one of claims 9 or 10, wherein the weight ratio of the first organic pigment P1, the second organic pigment P2, and the third organic pigment P3 is (10-80):(50-10):(50-10).

12. A pigment/resin mixture as claimed in any one of claims 9 to 11, wherein the total content of halogens present in the organic pigments P1, P2, and P3 as impurities, as determined by ion chromatography, is 5,000 ppm or less.

13. A pigment/resin mixture as claimed in any one of claims 9 to 12, wherein the organic pigments P1, P2, and P3 have a heat resistance temperature of a dispersion in polypropylene resin in accordance with the German standard DIN EN 12877, of 260 °C or higher.

14. A pigment/resin mixture as claimed in any one of claims 8 to 13, wherein the resin is selected from the group consisting of homo- and copolymers of an olefin, such as ethylene or propylene, butadiene, a (meth)acrylate, styrene, acrylonitrile, or the like, polyamides, polyesters, polycarbonates, polyacetals, polysulfones, poly(phenylene oxides), poly(ether sulfones), polycycloolefins, silicone resins, fluororesins, and poly(lactic acid).

15. A molded electric part comprising a pigment/resin mixture according to any one of claims 8 to 14.

## Patentansprüche

1. Pigmentzusammensetzung, umfassend mehrere organische Pigmente P1 und P2 als wesentliche Komponenten und gegebenenfalls ferner ein drittes Pigment P3, wobei es sich bei dem ersten Pigment P1 um mindestens ein Phthalocyaninpigment handelt, es sich bei dem zweiten Pigment P2 um mindestens ein Pigment, das aus Perylenpigmenten ausgewählt ist, handelt und wobei es sich bei dem Perylenpigment um C.I. Pigment Red 149 und/oder C.I. Pigment Red 179 handelt und
jedes der organischen Pigmente P1, P2 und P3 ein Pigment ist, das in seiner Molekularstruktur kein Halogen enthält.

2. Pigmentzusammensetzung nach Anspruch 1, wobei es sich bei dem organischen Pigment P1 und mindestens eines aus der Gruppe bestehend aus C.I. Pigment Blue 15, C.I. Pigment Blue 15:1 , C.I. Pigment Blue 15:2, C.I. Pigment Blue 15:3, C.I. Pigment Blue 15:4, C.I. Pigment Blue 15:5, C.I. Pigment Blue 15:6 und C.I. Pigment Blue 16 handelt.

3. Pigmentzusammensetzung nach einem der Ansprüche 1 bis 2, wobei es sich bei dem organischen Pigment P3 um mindestens eines aus der Gruppe bestehend aus Azopigmenten, Perinonpigmenten, Chinacridonpigmenten und Anthrachinonpigmenten handelt.

4. Pigmentzusammensetzung nach einem der Ansprüche 1 bis 3, wobei das Gewichtsverhältnis des ersten organischen Pigments P1, des zweiten organischen Pigments P2 und des dritten organischen Pigments P3 (10-80):(50-10):(50-10) beträgt.

5. Pigmentzusammensetzung nach einem der Ansprüche 1 bis 4, wobei der Gesamtgehalt an Halogenen, die in den organischen Pigmenten P1, P2 und P3 als Verunreinigungen vorliegen, gemäß Bestimmung durch Ionenchromatographie 5000 ppm oder weniger beträgt.

6. Pigmentzusammensetzung nach einem der Ansprüche 1 bis 5, wobei die organischen Pigmente P1, P2 und P3 eine Wärmebeständigkeitstemperatur einer Dispersion in einem Polypropylenharz gemäß der deutschen Norm DIN EN 12877 von 260°C oder mehr aufweisen.

7. Verwendung von mehreren organischen Pigmenten P1 und P2 als wesentliche Komponenten und eines dritten Pigments P3 als fakultative Komponente zum Schwärzen eines Harzes,
wobei jedes der organischen Pigmente P1, P2 und P3 ein Pigment ist, das in seiner Molekularstruktur kein Halogen enthält, und wie in einem der vorhergehenden Ansprüche beansprucht ist.

8. Pigment/Harz-Mischung, die durch Schmelzmischen einer Pigmentzusammensetzung nach einem der Ansprüche 1 bis 6 mit einem Harz und anschließendes Formen der Mischung erhältlich ist.

9. Pigment/Harz-Mischung, die durch gemeinsames Schmelzmischen von Harzpellets, die ein erstes organisches Pigment P1 umfassen, Harzpellets, die ein zweites organisches Pigment P2 umfassen, und gegebenenfalls Harzpellets, die ein drittes organisches Pigment P3 umfassen, und anschließendes Formen der Mischung erhältlich sind,
wobei jedes der organischen Pigmente P1, P2 und P3 ein Pigment ist, das in seiner Molekularstruktur kein Halogen enthält, und wie in einem der vorhergehenden Ansprüche beansprucht ist.

10. Pigment/Harz-Mischung nach Anspruch 9, wobei es sich bei dem organischen Pigment P1 und mindestens eines aus der Gruppe bestehend aus C.I. Pigment Blue 15, C.I. Pigment Blue 15:1 , C.I. Pigment Blue 15:2, C.I. Pigment Blue 15:3, C.I. Pigment Blue 15:4, C.I. Pigment Blue 15:5, C.I. Pigment Blue 15:6 und C.I. Pigment Blue 16 handelt.

11. Pigment/Harz-Mischung nach einem der Ansprüche 9 oder 10, wobei das Gewichtsverhältnis des ersten organischen Pigments P1, des zweiten organischen Pigments P2 und des dritten organischen Pigments P3 (10-80):(50-10):(50-10) beträgt.

12. Pigment/Harz-Mischung nach einem der Ansprüche 9 bis 11, wobei der Gesamtgehalt an Halogenen, die in den organischen Pigmenten P1, P2 und P3 als Verunreinigungen vorliegen, gemäß Bestimmung durch Ionenchromatographie 5000 ppm oder weniger beträgt.

13. Pigment/Harz-Mischung nach einem der Ansprüche 9 bis 12, wobei die organischen Pigmente P1, P2 und P3 eine Wärmebeständigkeitstemperatur einer Dispersion in einem Polypropylenharz gemäß der deutschen Norm DIN EN 12877 von 260°C oder mehr aufweisen.

14. Pigment/Harz-Mischung nach einem der Ansprüche 8 bis 13, wobei das Harz aus der Gruppe bestehend aus Homo- und Copolymeren von einem Olefin, wie Ethylen oder Propylen, Butadien, einem (Meth)arylat, Styrol, Acrylnitril oder dergleichen, Polyamiden, Polyestern, Polycarbonaten, Polyacetalen, Polysulfonen, Poly(phenylenoxiden), Poly(ethersulfonen), Polycycloolefinen, Silikonharzen, Fluorharzen und Poly(milchsäure) ausgewählt ist.

15. Elektroformteil, umfassend eine Pigment/Harz-Mischung nach einem der Ansprüche 8 bis 14.

## Revendications

1. Composition pigmentaire comprenant une pluralité de pigments organiques P1 et P2 comme constituants essentiels et comprenant en outre éventuellement un troisième pigment P3,
le premier pigment P1 étant au moins un pigment de phtalocyanine,
le deuxième pigment P2 étant au moins un pigment choisi parmi les pigments de pérylène, et le pigment de pérylène étant le pigment rouge C.I. 149 et/ou le pigment rouge C.I. 179, et
chacun des pigments organiques P1, P2 et P3 étant un pigment qui ne contient pas d'halogène dans sa structure moléculaire.

2. Composition pigmentaire selon la revendication 1, dans laquelle le pigment organique P1 en est au moins un choisi dans le groupe constitué par le pigment bleu C.I. 15, le pigment bleu C.I. 15:1, le pigment bleu C.I. 15:2, le pigment bleu C.I. 15:3, le pigment bleu C.I. 15:4, le pigment bleu C.I. 15:5, le pigment bleu C.I. 15:6, et le pigment bleu C.I. 16.

3. Composition pigmentaire selon l'une quelconque des revendications 1 à 2, dans laquelle le pigment organique P3 en est au moins un choisi dans le groupe constitué par les pigments azoïques, les pigments de périnone, les pigments de quinacridone, et les pigments d'anthraquinone.

4. Composition pigmentaire selon l'une quelconque des revendications 1 à 3, dans laquelle le rapport pondéral du premier pigment organique P1, du deuxième pigment organique P2 et du troisième pigment organique P3 est de (10-80) : (50-10) : (50-10) .

5. Composition pigmentaire selon l'une quelconque des revendications 1 à 4, dans laquelle la teneur totale des halogènes présents dans les pigments organiques P1, P2 et P3 comme impuretés, telle que déterminée par chromatographie ionique, est de 5000 ppm ou moins.

6. Composition pigmentaire selon l'une quelconque des revendications 1 à 5, dans laquelle les pigments organiques P1, P2 et P3 ont une température de résistance à la chaleur d'une dispersion dans une résine de polypropylène conformément à la norme allemande DIN EN 12877 de 260 °C ou plus.

7. Utilisation d'une pluralité de pigments organiques P1 et P2 comme ingrédients essentiels et d'un troisième pigment P3 comme ingrédient facultatif, pour rendre une résine noire, et chacun des pigments organiques P1, P2 et P3 étant un pigment qui ne contient pas d'halogène dans sa structure moléculaire et est selon l'une quelconque des revendications précédentes.

8. Mélange pigment/résine pouvant être obtenu en mélangeant à l'état fondu une composition pigmentaire selon l'une quelconque des revendications 1 à 6 avec une résine, et en moulant ensuite le mélange.

9. Mélange pigment/résine pouvant être obtenu en mélangeant à l'état fondu des granulés de résine comprenant un premier pigment organique P1, des granulés de résine comprenant un deuxième pigment organique P2 et éventuellement des granulés de résine comprenant un troisième pigment organique P3, et en moulant ensuite le mélange, et
chacun des pigments organiques P1, P2 et P3 étant un pigment qui ne contient pas d'halogène dans sa structure moléculaire et est selon l'une quelconque des revendications précédentes.

10. Mélange pigment/résine selon la revendication 9, dans lequel le pigment organique P1 en est au moins un choisi dans le groupe constitué par le pigment bleu C.I. 15, le pigment bleu C.I. 15:1, le pigment bleu C.I. 15:2, le pigment bleu C.I. 15:3, le pigment bleu C.I. 15:4, le pigment bleu C.I. 15:5, le pigment bleu C.I. 15:6, et le pigment bleu C.I. 16.

11. Mélange pigment/résine selon l'une quelconque des revendications 9 ou 10, dans lequel le rapport pondéral du premier pigment organique P1, du deuxième pigment organique P2 et du troisième pigment organique P3 est de (10-80) : (50-10) : (50-10) .

12. Mélange pigment/résine selon l'une quelconque des revendications 9 à 11, dans lequel la teneur totale des halogènes présents dans les pigments organiques P1, P2 et P3 comme impuretés, telle que déterminée par chromatographie ionique, est de 5000 ppm ou moins.

13. Mélange pigment/résine selon l'une quelconque des revendications 9 à 12, dans lequel les pigments organiques P1, P2 et P3 ont une température de résistance à la chaleur d'une dispersion dans une résine de polypropylène conformément à la norme allemande DIN EN 12877 de 260 °C ou plus.

14. Mélange pigment/résine selon l'une quelconque des revendications 8 à 13, dans lequel la résine est choisie dans le groupe constitué par les homo- et copolymères d'une oléfine, telle que l'éthylène ou le propylène, le butadiène, un (méth)acrylate, le styrène, l'acrylonitrile, ou leurs équivalents, les polyamides, les polyesters, les polycarbonates, les polyacétals, les polysulfones, les poly(oxydes de phénylène), les poly(éthersulfones), les polycyclooléfines, les résines de silicone, les résines fluorées, et le poly(acide lactique).

15. Pièce électrique moulée comprenant un mélange pigment/résine selon l'une quelconque des revendications 8 à 14.
